# FASCICULE DE BREVET EUROPEEN

(11) **EP 4 051 444 B1**
(45) Date de publication et mention de la délivrance du brevet: **29.11.2023**
(21) Numéro de dépôt: 20807833.7
(22) Date de dépôt: 27.10.2020
(51) Int. Cl.: B22F 3/08, B22F 3/087, B33Y 10/00, B33Y 30/00, B22F 10/25, B22F 10/36, B22F 12/43, C23C 26/00, C23C 24/04, B22F 10/31

(54) **EQUIPEMENT ET PROCÉDÉ DE DÉPÔT DE PARTICULES PAR ONDES DE CHOC LASER**
VORRICHTUNG UND VERFAHREN ZUR ABSCHEIDUNG VON TEILCHEN MITTELS LASERSCHOCKWELLEN
EQUIPMENT AND METHOD FOR DEPOSITING PARTICLES USING LASER SHOCKWAVES

(30) Priorité: 29.10.2019 FR 1912143
(43) Date de publication de la demande: 07.09.2022
(73) Titulaire: UNIVERSITE DE BORDEAUX, 33000 Bordeaux (FR); CENTRE NATIONAL DE LA RECHERCHE SCIENTIFIQUE (CNRS), 75016 Paris (FR); Ecole Nationale Supérieure d'Arts et Métiers (ENSAM), 75013 Paris (FR); Institut Polytechnique de Bordeaux, 33400 Talence (FR)
(72) Inventeur: KROMER, Robin, 33140 Villenave D'Ornon (FR)
(74) Mandataire: Plasseraud IP
(86) Numéro de dépôt international: PCT/FR2020/051941
(87) Numéro de publication internationale: WO 2021/084201

(56) Documents cités:
- WO-A1-97/05970
- WO-A1-2016/124708
- CN-A- 105 271 106
- DE-A1- 19 503 178
- FR-A1- 3 068 290

## Description

### Domaine technique

La présente invention concerne un équipement de dépôt par projection de particules par ondes de choc laser. La présente invention concerne également un procédé de dépôt par projection de particules par ondes de choc laser. Plus précisément le procédé de la présente invention consiste à réaliser une projection particule par particule, à la bonne position et à la bonne vitesse, sur des zones déterminées d'une cible en vue de réaliser un traitement local surfacique ou une fonctionnalisation des zones de la cible, ou pour réaliser une pièce tridimensionnelle sur une zone cible par juxtaposition de dépôt .

L'invention s'applique en particulier à la réalisation des motifs complexes à l'échelle microscopique et/ou mésoscopique, sur des substrats ou des pièces.

L'invention s'applique également à un traitement ciblé de la surface d'un revêtement en venant déposer par projection, particule par particule, dans des zones cibles afin de réduire la rugosité de la surface d'une pièce réalisée par exemple par fabrication additive.

Le domaine technique de l'invention peut être défini de manière générale comme celui de la projection assistée par laser.

### Technique antérieure

Il est connu d'utiliser la projection thermique dans de nombreux domaines industriels tels que l'automobile, l'aéronautique pour réaliser le dépôt de couche de revêtements épais, d'une épaisseur de quelques dizaines de micromètres à quelques centaines voire milliers de micromètres sur des substrats ou pièces.

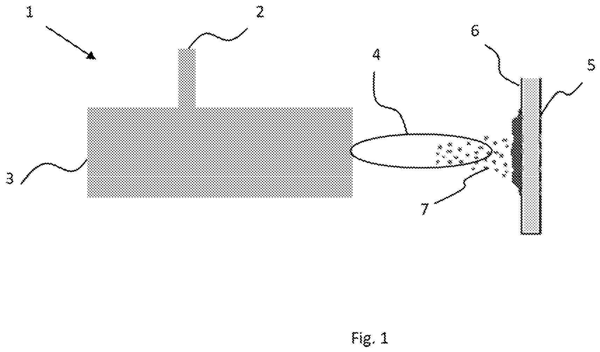

La figure 1 illustre un exemple d'équipement de projection thermique 1 selon l'art antérieur comprenant une entrée 2 pour le matériau à déposer et une entrée 3 pour la source d'énergie. La projection thermique consiste à introduire dans un gaz 4, dit gaz de projection, le matériau sous forme de fines particules 7 à déposer. Le gaz est utilisé pour accélérer, chauffer et transporter jusqu'à la pièce à revêtir de fines particules 7 qui viennent impacter la surface 6 d'un substrat 5. Ces fines particules 7, solides à l'état initial, peuvent être à l'état liquide, semi-fondu, voir solide après passage dans le gaz de projection. Ainsi, les particules projetées sur le substrat s'écrasent et s'étalent de différentes manières selon leur cinétique, leur état après le passage dans le gaz, leur température, le matériau du substrat, etc. L'accumulation des particules sur le substrat permet de réaliser le revêtement par empilement de ces particules.

Il existe de nombreuses manières de réaliser un dépôt par projection thermique. Une des techniques connues est la projection par plasma permettant de réaliser des revêtements métalliques ou céramiques. Elle est plus particulièrement utilisée pour la déposition de revêtements céramiques pour le revêtement de pièces de géométrie et de taille variées. La projection plasma consiste à injecter le matériau à déposer sous forme de particules au sein d'un milieu plasma où elles sont chauffées et accélérées vers un substrat. Le revêtement est construit par empilement successif de particules fondues ou partiellement fondues qui impactent le substrat où elles se refroidissent. L'épaisseur du revêtement est comprise généralement entre 500µm et 1mm.

Une autre technique connue est un procédé de projection thermique à froid (CS pour coldspray en anglais). Les poudres métalliques sont projetées à vitesse très élevée par un gaz sous pression (jusqu'à 50 bar et à 1100 °c) sur une cible qui est une pièce neuve ou une pièce à réparer. Une tuyère convergent-divergente (type De-Laval) permet de transformer la température et la pression du gaz en énergie cinétique, entraînant son accélération jusqu'à une vitesse supersonique et son refroidissement à une température inférieure à 100 °C. Les poudres injectées dans la zone haute pression de la buse de projection sont accélérées à des vitesses pouvant atteindre 1200 m/s. La déformation des particules lors de l'impact permet d'obtenir des revêtements présentant une structure très dense et une très bonne adhérence.

Dans la technique de projection thermique, pour obtenir une bonne adhérence mécanique de la couche de revêtement sur le substrat, il est nécessaire de préparer la surface avec des matériaux abrasifs tels que le sable, le corindon et/ou de la glace afin de créer des aspérités à la surface du substrat pour pouvoir ancrer les particules. Préalablement au dépôt, des essais d'adhérence qui sont des méthodes connues sont généralement réalisés afin de définir une plage d'adhérence satisfaisante par rapport à un cahier des charges. En effet, si l'adhérence est médiocre, les particules ne peuvent pas s'accrocher à la surface du substrat pendant le dépôt ou le revêtement obtenu peut se décoller facilement pendant la fabrication d'une pièce par exemple. Ces techniques de préparation de surface peuvent introduire des résidus à la surface du substrat et ne sont donc pas adaptées à tous les substrats ou toutes les pièces.

Par ailleurs, la projection plasma utilise une poudre comme matériau d'apport, avec des tailles de grains supérieures à une dizaine de micromètres. Dans le cas de l'obtention de structures nanométriques ou microniques, cela nécessite une diminution de la taille des particules élémentaires. En outre, l'injection d'une particule dans un jet de plasma par l'intermédiaire d'un gaz vecteur exige que la quantité de mouvement des particules coïncide avec celle du gaz de projection, ou soit au moins légèrement supérieure pour permettre aux particules de bien pénétrer dans le gaz de projection. Par conséquent, lorsque la masse des particules diminue, il est nécessaire de bien contrôler la distribution granulométrique ainsi que les paramètres d'injection (débit de gaz, diamètre de l'injecteur et le positionnement de l'injecteur par rapport au jet) de sorte à limiter la dispersion de la poudre dans le jet afin d'obtenir une trajectoire optimale de la projection des particules sur la cible.

CN 105 271 106 A divulgue un équipement de dépôt sélectif par projection par ondes de choc d'au moins une particule sur une surface de dépose d'un substrat receveur, ledit équipement comprenant au moins une source laser configurée pour émettre un faisceau laser, ledit faisceau laser étant constitué d'une série d'impulsions lumineuses; un support de substrat sur lequel est fixé le substrat; une couche génératrice d'ondes de choc comprenant une première surface orientée vers le faisceau laser et une seconde surface orientée vers la surface de dépose du substrat; un système optique pour diriger et focaliser ledit faisceau laser vers une zone de focalisation de la première surface de la couche génératrice. 11

De façon générale, les solutions de l'art antérieur ne permettent pas un dépôt sélectif par projection, particule par particule dans une zone particulière d'une pièce par exemple, en particulier avec une résolution spatiale micronique.

En outre, les solutions de l'art antérieur ne permettent pas de déposer différents matériaux localement sur une zone cible de manière à générer par exemple des revêtements multi-phases. On entend par revêtements multi-phases, des revêtements composites formés d'au moins deux matériaux différents, ou d'au moins deux phases de matériaux.

Par ailleurs, un autre problème que l'invention vise à remédier concerne les difficultés liées au dépôt de particules à partir d'une buse. En effet, il est nécessaire de contrôler la section de la buse et la densité des particules pour obtenir des résolutions spatiales élevées.

Aussi, la présente invention vise à remédier aux inconvénients de l'art antérieur en proposant un équipement et un procédé qui permettent de réaliser un dépôt de matériau particule par particule avec une grande précision sur des substrats et des pièces pour obtenir un revêtement microstructuré, ayant des propriétés d'adhérence excellente ou améliorées sans avoir recours à une préparation de la surface du substrat. En particulier, l'équipement et le procédé de la présente invention permet de déposer une large gamme de matériau, notamment de manière à former des motifs complexes multi-phases à partir des assemblages particule par particule.

### Exposé de l'invention

Il est proposé un équipement de dépôt sélectif par projection par ondes de choc d'au moins une particule sur une surface de dépose d'un substrat receveur, ledit équipement comprenant :
- au moins une source laser configurée pour émettre un faisceau laser, ledit faisceau laser étant constitué d'une série d'impulsions lumineuses;
- un support de substrat sur lequel est fixé le substrat;
- une couche génératrice d'ondes de choc comprenant une première surface orientée vers le faisceau laser et une seconde surface orientée vers la surface de dépose du substrat ;
- un système optique pour diriger et focaliser ledit faisceau laser vers une zone de focalisation de la première surface de la couche génératrice ;
- ladite seconde surface comprenant une pluralité de cavités, chacune des cavités logeant au moins une particule;
- ledit faisceau laser étant configuré pour générer un plasma au niveau de la zone de focalisation sur la première surface de la couche génératrice et une onde de choc se propageant au sein de la couche génératrice depuis la première surface vers la seconde surface de la couche génératrice pour éjecter au moins une particule en direction de la surface de dépose du substrat.

On entend par « particule » au sens de la présente divulgation une particule métallique, en particulier des particules microniques.

Par particules microniques, on entend des particules ayant une taille comprise entre 1 et 100 µm.

L'équipement et le procédé selon l'invention permettent avantageusement d'utiliser la technique de choc laser pour déposer des particules de manière sélective, particule par particule, sur la surface d'un substrat et de construire une pièce tridimensionnelle formée à partir des particules sur une zone cible.

Grâce à la solution proposée dans la présente divulgation, il n'est plus nécessaire de réaliser une préparation préalable de la surface du substrat, telle qu'un sablage, afin d'augmenter la rugosité de surface pour favoriser un ancrage mécanique des particules. En d'autres termes, il n'est plus nécessaire de modifier l'état de la surface du substrat pour assurer l'adhérence entre le revêtement et le substrat. De ce fait, il est par exemple e possible de réaliser des dépôts de particules sur des pièces fragiles, notamment des pièces médicales ou des pièces de joaillerie.

L'équipement et le procédé selon l'invention permettent avantageusement de réaliser des motifs à l'échelle micronique sur des substrats ou des pièces de forme complexe ou de fonctionnaliser localement une zone d'intérêt d'un substrat.

En supprimant l'utilisation du gaz porteur et en utilisant uniquement l'onde de choc générée par le plasma pour projeter les particules une à une sur la surface de dépose du substrat, la solution technique proposée permet de s'affranchir des problèmes et des contraintes techniques liés au contrôle de la quantité de mouvement des particules et au contrôle de la section de la buse utilisée dans l'art antérieur, et autoriser des dépôts quelles que soient la nature de la surface du substrat, la nature de particules, la forme et la géométrie du substrat.

Grâce au dépôt de particules une par une de manière sélective, il est possible de construire des motifs microniques 2D ou 3D sur une zone cible d'une pièce métallique existante, ou d'obtenir une pièce par accumulation de particule les unes sur les autres.

La solution proposée de la présente divulgation permet également de traiter la rugosité surfacique d'une pièce obtenue par fabrication additive. En effet, les pièces obtenues par un procédé de fabrication additive présentent généralement une rugosité arithmétique du profil (Ra) allant de quelques micromètres à quelques dizaines de micromètres. Cette rugosité est associée à l'empilement par couches successives propre au procédé de fabrication additive et également à la présence des grains de poudre qui sont agglomérés à la surface de la pièce. Le procédé de la présente divulgation permet de déposer des particules de même nature que le matériau que la pièce, une à une, dans les zones rugueuses afin de réduire la rugosité surfacique.

La solution proposée permet également de densifier une zone cible d'une pièce afin d'améliorer les propriétés en fatigue de la pièce.

Selon un mode de réalisation de l'invention, l'équipement comprend en outre une couche de confinement transparente à la longueur d'onde du faisceau laser et recouvrant la première surface de la couche génératrice, ladite couche de confinement étant configurée pour confiner le plasma généré au niveau de la première surface de la couche génératrice. Cette couche de confinement est une couche en verre ou une couche d'eau.

Selon un mode de réalisation de l'invention, l'équipement comprend en outre un système de pilotage de la source laser configuré pour commander un niveau d'énergie du faisceau laser.

Selon une forme de réalisation de l'invention, le système de pilotage comprend un calculateur configuré pour déterminer un niveau d'énergie optimal du faisceau laser à partir d'un modèle numérique en fonction de la taille de la particule, du matériau de la particule, du matériau du substrat receveur, du matériau de la couche génératrice et de l'épaisseur de la couche génératrice.

Selon un mode de réalisation de l'invention, l'équipement comprend en outre un moyen de chauffage pour chauffer le substrat.

Selon une forme de réalisation de l'invention, l'équipement comprend en outre un capteur de température configuré pour mesurer la température du substrat.

Selon un autre mode de réalisation de l'invention, l'équipement comprend en outre un système d'acquisition d'images, tel qu'une caméra.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- la couche de confinement présente une épaisseur comprise entre 200 et 5000 µm ;
- la couche génératrice d'ondes de choc présente une épaisseur comprise entre 200 et 3000 µm.
- la source laser est configurée pour émettre un faisceau laser constitué d'une série d'impulsions lumineuses avec une durée d'impulsion comprise entre 1 et 5 nanosecondes, avec un niveau d'énergie compris entre 1 et 10 joules ;
- chaque cavité comprend au moins deux logements, chacun des logements logeant une particule ;
- les particules ont un diamètre compris entre 5 µm et 100 µm.

Selon un autre aspect, la présente invention propose également un procédé de dépôt de particules utilisant l'équipement de dépôt tel que décrit ci-dessus, comprenant les étapes suivantes :
- dans une première étape (E1), générer un faisceau laser constitué d'une série d'impulsions lumineuses ;
- dans une deuxième étape (E2), diriger le faisceau laser vers la première surface de la couche génératrice et focaliser le faisceau laser au niveau d'une zone de focalisation sur la première surface de la couche génératrice ;
- dans une troisième étape (E3), ajuster le niveau d'énergie du faisceau laser de manière à générer un plasma au niveau de la première surface de la couche génératrice d'ondes de choc ;
- dans une quatrième étape (E4), générer des ondes de choc au sein de la couche génératrice, les ondes de choc se propageant depuis la première surface en direction de la seconde surface de la couche génératrice pour éjecter au moins une particule en direction de la surface de dépose du substrat.

Selon un mode de réalisation de l'invention, le niveau d'énergie du faisceau laser est calculé à partir d'un modèle numérique en fonction de la taille de la particule, du matériau de la particule, du matériau du substrat receveur, du matériau de la couche génératrice, de l'épaisseur de la couche génératrice.

Selon un autre mode de réalisation de l'invention, le procédé comprend en outre une étape préliminaire (E0) de calibration du niveau d'énergie du faisceau laser comprenant les étapes suivantes :
- répéter les étapes E1 à E4 pour déposer au moins une particule sur une région de calibration de la surface de dépose d'un substrat,
- acquérir au moins une image de la zone d'impact de ladite particule sur la surface de dépose du substrat,
- évaluer la déformation plastique de la particule et de la zone d'impact de la surface de dépose du substrat en fonction du niveau d'énergie du faisceau laser,
- déterminer le niveau d'énergie optimal du faisceau laser.

### Brève description des dessins

D'autres caractéristiques, détails et avantages de l'invention apparaîtront à la lecture de la description détaillée ci-après, et à l'analyse des dessins annexés, sur lesquels :
**Fig. 1**
   [Fig. 1] montre un dispositif de projection thermique de particules selon l'art antérieur;
**Fig. 2**

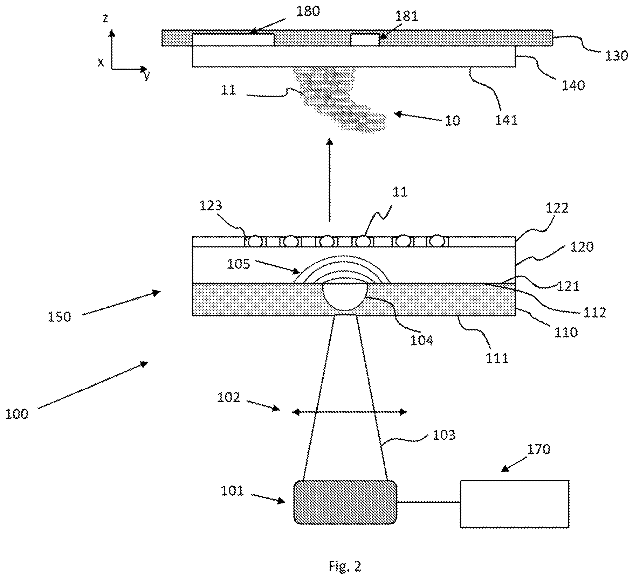

   [Fig. 2] montre un équipement de dépôt sélectif par projection par ondes de choc laser de particules selon un mode de réalisation de l'invention;
**Fig. 3**

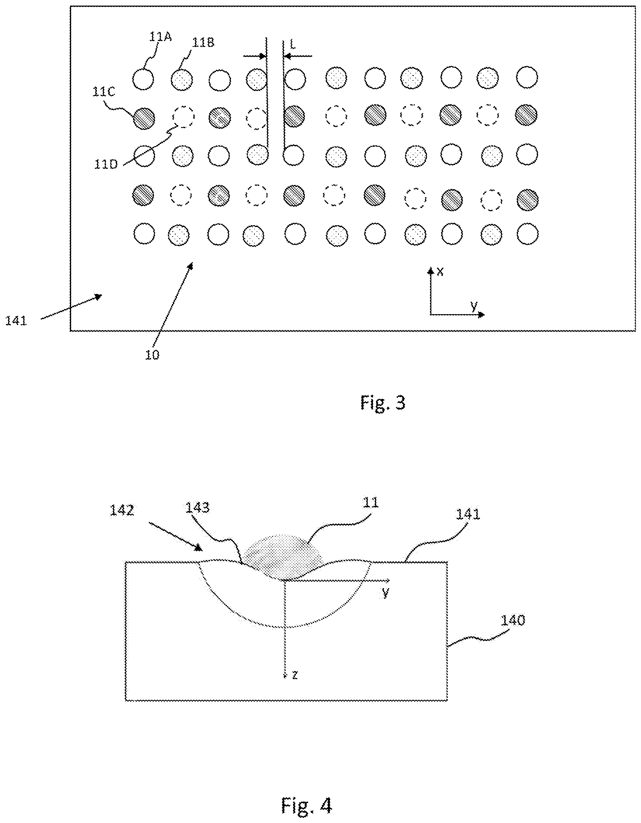

   [Fig. 3] montre un exemple de motif réalisé au moyen de l'équipement de la figure 2;
**Fig. 4**
   [Fig. 4] montre une vue schématique de l'état d'une particule lors de son impact sur la surface d'une cible;
**Fig. 5**

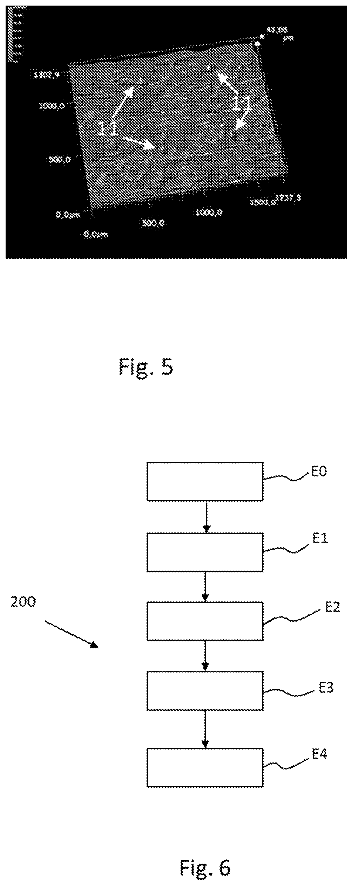

   [Fig. 5] montre une image 3D observée au microscope optique, de la surface d'un motif composé de quatre particules, le motif ayant été réalisé au moyen de l'équipement selon un mode de réalisation de l'invention;
**Fig. 6**
   [Fig. 6] est un organigramme du procédé de dépôt de particules selon un mode de réalisation de l'invention.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Sur la figure 2, on a représenté un équipement de dépôt sélectif par projection par ondes de choc laser de particules 100 selon un mode de réalisation de l'invention. Selon ce mode de réalisation, l'équipement comprend une source laser 101 configurée pour émettre un faisceau laser 103 qui est défini par les paramètres suivants : sa longueur d'onde, sa fréquence, son énergie, son diamètre et sa durée d'impulsion. De préférence, la source laser est paramétrable afin d'ajuster au moins un des paramètres, notamment son niveau d'énergie.

A titre d'exemple et notamment dans l'exemple d'utilisation de l'équipement de dépôt de particules pour déposer quatre particules à une vitesse de 500m/s (figure 5), le train d'impulsions laser a une durée égale à 40 ns, à une longueur d'onde de 1064 nm. Le faisceau laser émis a une énergie de 10 J.

L'équipement comprend également un support de substrat 130 sur lequel est fixé un substrat receveur 140 destiné à recevoir les particules projetées par l'équipement. Plus précisément, le substrat receveur comprend une première surface de dépose libre 141 orientée vers le faisceau laser et une seconde surface fixée sur le support. Le support est monté sur une platine mobile se déplaçant dans un plan horizontal (X, Y) perpendiculaire à la direction du faisceau laser, pour déplacer la position de dépose de la particule. Le support 130 est orientable selon les trois directions afin de présenter la surface de dépose perpendiculairement au faisceau laser, de manière à maximiser l'accrochage entre la particule et la surface de dépose. En outre, un tel support permet de réaliser des motifs complexes.

Dans la présente divulgation, la surface de dépose 141 correspond à la surface d'un substrat pour les particules de la première couche ou à la surface de la couche déposée sur le substrat receveur pour les particules de la couche suivante.

L'équipement de dépôt 100 comprend en outre un système optique 102 qui permet un réglage de la focalisation selon un axe Z perpendiculaire à la surface de dépose.

La source laser 101 et le système optique 102 ne sont pas plus décrits car ils sont connus de l'homme du métier et peuvent être similaires à ceux de l'art antérieur.

L'équipement de dépôt comprend également au moins un support donneur de particules 150.

Comme l'illustre la figure 2 et selon un mode de réalisation de l'invention, le support donneur 150 comprend une couche de confinement de plasma 110 et une couche génératrice d'ondes de choc 120.

La couche de confinement 110 présente une première surface libre 111 orientée vers le faisceau laser et une seconde surface 112. La couche génératrice d'ondes de choc 120 présente une première surface 121 ayant une interface de contact avec la seconde surface 112 de la couche de confinement 110 et une seconde surface 122 libre. La seconde surface libre 122 comprend une pluralité de cavités 123, chacune des cavités étant configurée pour loger une particule 11.

Ainsi, la couche de confinement de plasma 110 et la couche génératrice d'ondes de choc 120 formant le support donneur 150 de particules se présentent sous la forme d'un empilement.

L'équipement de dépôt comprend également une deuxième platine mobile (non illustrée) sur laquelle est monté de manière amovible le support donneur 150, la platine mobile se déplaçant dans un plan horizontal X, Y perpendiculaire à la direction du faisceau laser. Ainsi, grâce à la deuxième platine mobile, il est possible de déplacer la position de focalisation du faisceau laser sur la première surface 121 de la couche génératrice d'ondes de choc 120 de manière à projeter sélectivement les particules une par une sur une zone cible de la surface de dépose 141 du substrat 140. Ainsi, il est possible de choisir une particule 11 en particulier et de projeter cette particule sélectionnée sur une zone déterminée de la surface de dépose.

Selon un mode de réalisation de l'invention, l'équipement de dépôt comprend un système de commande et de contrôle de déplacement du substrat receveur 140 et du support donneur 150 via les platines avec une précision micrométrique et orientable selon six axes afin de générer des formes complexes.

Selon un autre mode de réalisation de l'invention, l'équipement de dépôt comprend un système de commande et de contrôle de déplacement pour chaque platine.

La couche de confinement 110 est en matériau transparent pour la longueur d'onde du faisceau laser. Cette couche peut également être de l'eau contenue dans un boitier. Le système optique 102 est configuré pour focaliser le faisceau laser 103 sur la première surface 121 de la couche génératrice d'ondes de choc, au travers de la couche de confinement.

Cette couche de confinement 110 a pour fonction de freiner l'expansion volumique du plasma généré à l'interface 121 de manière à générer une pression plus importante, permettant ainsi une augmentation de la pression sur la première surface de la couche génératrice d'ondes de choc 120. De plus, la présence de la couche de confinement permet d'augmenter également la durée de l'application de la pression. De préférence, la couche de confinement 110 présente une épaisseur comprise entre 200 µm et 5000 µm. La couche de confinement est une couche diélectrique. Elle est de préférence en verre. Elle peut également être remplacée par de l'eau distillée ou un film de ruban adhésif transparent.

La couche génératrice d'ondes de choc 120 est en matériau métallique, par exemple en aluminium, ou en matériau plastique absorbant à la longueur d'onde du faisceau laser. Elle présente une épaisseur comprise entre 200µm et 3000µm. Selon un phénomène physique connu, lorsqu'une impulsion photonique de courte durée et de forte puissance est focalisée sur la première surface 121 de la couche génératrice 120, l'interaction laser-matière se traduit tout d'abord par une pénétration du faisceau laser dans l'épaisseur de la couche génératrice créant une zone d'absorption de l'énergie laser. L'épaisseur de pénétration des ondes optiques dans le solide est de l'ordre de quelques nanomètres. En raison de la très courte durée de l'impulsion et de la forte puissance du faisceau, la température s'élève fortement dans cette zone et une très faible épaisseur de matière de la couche génératrice est sublimée. De la vapeur ionisée est alors en contact avec le faisceau laser et génère un plasma chaud et dense qui continue d'absorber l'énergie pendant toute la durée de l'impulsion.

L'expansion du plasma généré au niveau de la première surface de la couche génératrice exerce une pression sur la première surface de la couche génératrice. Cette contrainte superficielle génère des ondes de compression dans l'épaisseur de la couche génératrice d'ondes de choc 120, donnant naissance à une onde de choc mécanique d'une amplitude pouvant atteindre quelques dizaines de GPas et se propageant en direction de la seconde surface 122. L'onde de choc ainsi créée se propage localement depuis la première surface 121 de la couche génératrice jusqu'à la seconde surface 122 de la couche génératrice. Sous l'effet de l'onde de choc qui va exercer une pression sur la particule logée dans la cavité, cette dernière est projetée en direction de la surface de dépose 141 du substrat receveur 140.

Les particules ont un diamètre compris entre 5 et 100 µm. Le substrat a une épaisseur comprise entre 500 et 2000 µm. Le dépôt des particules s'effectue à l'aide d'une source laser permettant de générer un faisceau laser de longueur d'onde 1064 nm avec une durée d'impulsion comprise entre 1 et 5 ns. Le diamètre du faisceau laser au point de focalisation est compris généralement entre 500 et 2000 µm. L'énergie du faisceau laser est comprise entre 5 et 10 joules.

Selon un autre mode de réalisation de l'invention non illustré, la cavité peut comprendre plusieurs logements, chacun des logements étant dimensionné pour recevoir une particule.

De manière avantageuse, l'agencement des cavités sur la surface libre 122 de la couche génératrice d'ondes de choc forme directement le motif souhaité à imprimer sur la surface de dépose. Ainsi, lorsque les particules sont projetées sur la surface de dépose du substrat receveur, les particules déposées forment directement le motif souhaité. La projection permet donc de déposer les particules et transférer le motif en même temps.

Les cavités présentent une section circulaire, ou ovale ou d'autres formes géométriques. Les cavités sont réalisables notamment par un procédé connu de traitement de texturation laser. Les cavités ainsi générées présentent une dimension micronique du même ordre de grandeur que les particules.

Ainsi, l'équipement de l'invention permet de réaliser des motifs en déposant particule par particule sur la surface de dépose d'un substrat à partir d'un support donneur par onde de choc laser.

Le motif peut comprendre une simple couche formée à partir d'une pluralité de particules. Le motif peut comprend également une pluralité de couches comme l'illustre la figure 2, chacune des couches étant formée d'une pluralité de particules.

Selon un mode de réalisation de l'invention, l'équipement de dépôt sélectif comprend un bâti supportant plusieurs supports donneurs 150 de particules, chacun des supports étant muni d'un type de particules et d'un motif. Le bâti est associé à un repère X, Y, Z. Les différents supports sont fixés sur le bâti et déplacés selon une direction X et une direction Y de manière à placer le support donneur en regard de la surface de dépose du substrat.

La figure 3 illustre un exemple de motif 10 de particules formant un réseau de particules à la surface de dépose 141 du substrat. Selon cet exemple, le motif comprend quatre types de particules 11A, 11B, 11C, 11D qui sont agencées à intervalle régulier L.

Selon un mode de réalisation de l'invention et comme l'illustre la figure 2, le faisceau laser 103 et la direction de projection des particules sont orientés à contre-sens par rapport à la force gravitationnelle. Sur la configuration illustrée sur la figure 2, la surface libre 122 de la couche génératrice d'ondes de choc 120 est orientée vers le haut, en direction de la surface de dépose 141 du substrat. Lors de la projection, la particule est éjectée depuis la cavité dans laquelle elle est logée selon un sens de bas en haut, dans le sens contraire à la force gravitationnelle. Dans cette configuration, les particules peuvent ainsi être maintenues facilement dans les cavités dans la couche génératrice d'ondes de choc. Dans le cas où la couche de confinement 110 est composée d'eau, la couche génératrice d'ondes de choc est immergée dans de l'eau.

### Détermination de la vitesse critique optimale d'une particule au moment de son impact sur un substrat

L'adhérence de la particule sur le substrat est un facteur prédominant dans la détermination des performances d'un revêtement.

On entend par « adhérence » au sens de la présente divulgation l'état où la particule et le substrat sont liés.

L'adhérence d'une particule au substrat est régie principalement par la vitesse critique d'impact de la particule.

On entend par vitesse critique au sens de la présente divulgation une vitesse en deçà de laquelle la particule n'adhère pas au substrat.

Dans les conditions optimales, la vitesse d'impact conduit à des efforts de cisaillement. La friction entre les deux matériaux solides et la déformation plastique qu'ils subissent provoquent une élévation de température locale de matériaux. La particule et la zone d'impact du substrat subissent une déformation plastique qui provoque une liaison entre la particule et le substrat.

La figure 4 illustre schématique les déformations plastiques subies par la particule 11 et la zone d'impact 142 du substrat au moment de l'impact de la particule sur le substrat 140. L'adhésion se traduit par un enfoncement de la particule dans le substrat et la formation d'une zone creuse 143 au niveau de la zone d'impact.

Le comportement d'une particule arrivant à grande vitesse, au moment de l'impact sur le substrat, a été simulé par un calcul aux éléments finis d'une sphère s'écrasant sur un plan. Selon un modèle connu, l'impact d'une particule sur un substrat a été modélisé au moyen d'une loi de comportement de type « Johnson-Cook ». A partir de ce modèle, il est possible de simuler le phénomène de déformation plastique d'une particule lors de son impact sur le substrat et de calculer la vitesse cinétique critique optimale pour l'adhésion de la particule sur le substrat en fonction des paramètres qui sont la taille de la particule, le matériau de la particule et le matériau du substrat.

### Détermination de la vitesse d'éjection de la particule

La vitesse critique optimale qui permet l'adhésion de la particule sur le substrat est liée directement à la vitesse à laquelle la particule est éjectée de la cavité sous l'effet de l'onde de choc. La vitesse d'éjection est donc liée à l'onde de choc générée par le faisceau laser dans la couche génératrice d'ondes de choc.

Selon un modèle connu, à partir des relations d'Hugoniot (lois de conservation d'état dans un milieu), l'équation d'état Mie-Grüneisen et la relation linéaire reliant la vitesse de l'onde de choc et la vitesse matérielle, il est possible de modéliser la propagation de l'onde de choc au sein de la couche génératrice. A partir de ces équations, il est ainsi possible de déterminer la vitesse à laquelle la particule sera éjectée en fonction de l'amplitude de l'onde choc induite par le faisceau laser, donc de la pression exercée par le plasma créé par le faisceau laser. De ce fait il est alors possible de déterminer le niveau optimal d'énergie du faisceau laser pour obtenir la vitesse optimale de projection de la particule en fonction du matériau de la couche génératrice et de l'épaisseur de la couche génératrice.

Ainsi, la vitesse de projection de la particule sous l'effet de l'onde de choc et la vitesse critique de la particule au moment de l'impact sur le substrat varient en fonction de la taille de la particule, le matériau de la particule, le matériau du substrat, l'épaisseur et le matériau de la couche génératrice d'ondes de choc, et le niveau d'énergie du faisceau laser.

En connaissant la taille de la particule, le matériau de la particule, le matériau du substrat receveur, l'épaisseur et le matériau de la couche génératrice, il est possible d'ajuster le niveau d'énergie du faisceau laser pour obtenir l'énergie cinétique critique de la particule au moment de son impact sur le substrat pour obtenir une bonne adhésion entre la particule et la surface de dépose du substrat.

La figure 5 illustre un exemple de dépôt de quatre particules de cuivre par ondes de choc laser sur un substrat d'aluminium.

La couche génératrice 110 est une couche métallique en aluminium et a une épaisseur de 500 µm. La couche de confinement est en verre et a une épaisseur de 5mm. La surface libre 122 de la couche génératrice comporte quatre cavités contenant chacune une particule en cuivre.

L'onde de choc a permis de projeter les quatre particules sur la surface de dépose. La vitesse des particules est de 500 m/s qui est une valeur expérimentale.

En référence à la figure 6, le procédé de dépôt de particules par projection par ondes choc laser sur la surface de dépose d'un substrat selon un mode de réalisation de l'invention est maintenant détaillé ci-dessous.

Dans une première étape (E1), le niveau d'énergie optimal du faisceau laser est calculé au sein d'un calculateur à partir d'un modèle numérique connu. Dans ce modèle, la taille de la particule, le matériau de la particule, le matériau du substrat receveur, l'épaisseur du substrat receveur, l'épaisseur de la couche génératrice d'ondes choc, le matériau de la couche génératrice sont des paramètres connus. Il est donc possible d'ajuster le niveau d'énergie du faisceau laser pour obtenir l'énergie cinétique critique de la particule au moment de son impact sur le substrat afin d'obtenir une bonne adhésion entre la particule et la surface de dépose du substrat.

Dans une deuxième étape (E2), le système de pilotage de la source laser commande la source laser de manière à émettre un faisceau laser avec les paramètres souhaités : le niveau d'énergie transmis par le calculateur, la longueur d'onde, la durée d'impulsion. Le faisceau laser est focalisé sur la première surface de la couche génératrice à travers la couche de confinement. Dans l'exemple illustré à la figure 5 de la présente divulgation, la source laser travaille par exemple à une longueur d'onde de 1064 nm pour une durée d'impulsion de 5,1 ns et un niveau d'énergie de 1 joule.

Dans une troisième étape (E3), un plasma est généré à la surface de l'interface entre la couche de confinement 110 et la couche génératrice d'ondes de choc 120 qui résulte de l'absorption de l'énergie du faisceau laser par la couche génératrice. Le plasma est créé sur un temps extrêmement court, typiquement de quelques nanosecondes après l'absorption du faisceau laser.

Dans une quatrième étape (E4), une onde de choc est générée au sein de la couche génératrice se propageant en direction de la seconde surface libre 122 porteuse de particules. Cette onde de choc résulte de la pression exercée par le plasma à la surface de la couche génératrice. L'onde de choc arrivant à la surface libre 122 provoque la projection de la particule logée dans la cavité de la seconde surface 122 en direction de la surface de dépose 141 du substrat 140.

Selon un mode de réalisation de l'invention, le procédé comprend une étape préliminaire (E0) de calibration de la vitesse critique de la particule, la vitesse critique étant la vitesse de la particule au moment de son impact sur la surface de dépose du substrat, afin d'obtenir une bonne adhérence entre la particule et le substrat. Cette étape de calibration permet donc de valider le modèle numérique avec des essais expérimentaux de dépôts de particules par ondes de choc laser sur un substrat d'essai. Cette étape de calibration peut également être réalisée sur une région spécifique d'un substrat dédiée à la calibration.

Cette étape préliminaire de calibration consiste à répéter les étapes E1 à E4 pour déposer une particule sur une région de calibration de la surface de dépose d'un substrat, avec différents niveaux d'énergie du faisceau laser calculés à partir du modèle numérique.

Dans cette étape préliminaire, suite à l'étape E4, les étapes sont :
- acquérir au moins une image de la zone d'impact de ladite particule sur la surface de dépose du substrat, puis
- évaluer la déformation plastique de la particule et de la zone d'impact de la surface de dépose du substrat en fonction du niveau d'énergie du faisceau laser,
- déterminer le niveau d'énergie optimal du faisceau laser.

Selon un mode de réalisation de l'invention, l'équipement de dépôt de particules comprend un système d'acquisition d'images tel qu'une caméra rapide dont la fréquence d'acquisition d'images comprise entre 1000 et 50000 Hz est synchronisée avec la fréquence d'impulsion de la source laser. Le système d'acquisition d'images permet d'acquérir en temps réel, pendant la procédure de dépôt, au moins une image de l'état de la particule juste après son impact sur la surface de dépose du substrat en fonction de différents niveaux d'énergie du faisceau laser calculés.

Les caractérisations tridimensionnelles de l'état de la particule permettent de contrôler qualitativement la déformation plastique de la particule et de la zone d'impact de la surface de dépose du substrat et d'évaluer la qualité d'adhésion entre la particule et le substrat. L'étape préliminaire de calibration permet de déterminer le niveau d'énergie optimal du faisceau laser qui sera utilisé pour le dépôt ultérieur des particules pour former le motif complexe ou la pièce.

### Application industrielle

L'invention peut trouver à s'appliquer notamment pour produire :
- des pièces de joaillerie avec des géométries complexes,
- des pièces médicales ;
- des revêtements de finition dans des zones cibles afin de réduire la rugosité de la surface des pièces obtenues notamment par fabrication additive ;
- des revêtements permettant de modifier les propriétés physiques d'une zone ;
- des revêtements électrofonctionnels.
- des revêtements anti-corrosions.

A titre d'exemple et de manière non limitative, les particules peuvent être en :
- matériaux précieux : or, argent, platine ou semi-précieux
- matériaux céramiques ;
- matériaux métalliques standard.

A titre d'exemple et de manière non limitative, le substrat peut être en :
- matériaux précieux : or, argent, platine ou semi-précieux ;
- matériaux métalliques;
- matériaux composites ;
- et céramiques.

## Revendications

1. Equipement de dépôt sélectif par projection par ondes de choc (100) d'au moins une particule (11) sur une surface de dépose (141) d'un substrat receveur (140), ledit équipement comprenant :
- au moins une source laser (101) configurée pour émettre un faisceau laser (103), ledit faisceau laser étant constitué d'une série d'impulsions lumineuses ;
- un support de substrat (130) sur lequel est fixé le substrat (140);
- une couche génératrice d'ondes de choc (120) comprenant une première surface (121) orientée vers le faisceau laser et une seconde surface (122) orientée vers la surface de dépose (141) du substrat ;
- un système optique (102) pour diriger et focaliser ledit faisceau laser vers une zone de focalisation de la première surface (121) de la couche génératrice ;
- ladite seconde surface (122) comprenant une pluralité de cavités (123), chacune des cavités logeant au moins une particule (11) ;
- ledit faisceau laser étant configuré pour générer un plasma (104) au niveau de la zone de focalisation sur la première surface (121) de la couche génératrice et une onde de choc (105) se propageant au sein de la couche génératrice (120) depuis la première surface (121) vers la seconde surface (122) de la couche génératrice pour éjecter au moins une particule (11) en direction de la surface de dépose (141) du substrat receveur (140).

2. Equipement de dépôt selon la revendication 1, comprenant en outre une couche de confinement (110) transparente à la longueur d'onde du faisceau laser et recouvrant la première surface (121) de la couche génératrice, ladite couche de confinement étant configurée pour confiner le plasma généré au niveau de la première surface (121) de la couche génératrice (120).

3. Equipement de dépôt selon la revendication 2, dans lequel ladite couche de confinement est une couche en verre ou une couche d'eau.

4. Equipement de dépôt selon la revendication 2 ou 3, dans lequel ladite couche de confinement présente une épaisseur comprise entre 200 et 5000 µm.

5. Equipement de dépôt selon l'une des revendications précédentes, comprenant en outre un système de pilotage (170) de la source laser configuré pour commander un niveau d'énergie du faisceau laser.

6. Equipement de dépôt selon la revendication 5, dans lequel le système de pilotage (170) comprend un calculateur configuré pour déterminer un niveau d'énergie optimal du faisceau laser à partir d'un modèle numérique en fonction de la taille de la particule, du matériau de la particule, du matériau du substrat receveur, du matériau de la couche génératrice, de l'épaisseur de la couche génératrice.

7. Equipement de dépôt selon l'une des revendications précédentes, comprenant en outre un moyen de chauffage (180) pour chauffer le substrat (140).

8. Equipement de dépôt selon l'une des revendications précédentes, comprenant en outre un capteur de température (181) configuré pour mesurer la température du substrat.

9. Equipement de dépôt selon l'une des revendications précédentes, comprenant en outre un système d'acquisition d'images, tel qu'une caméra.

10. Equipement de dépôt selon l'une des revendications précédentes, dans lequel ladite source laser (101) est configurée pour émettre un faisceau laser constitué d'une série d'impulsions lumineuses avec une durée d'impulsion comprise entre 1 et 5 nanosecondes, avec un niveau d'énergie compris entre 1 et 10 joules.

11. Equipement de dépôt selon l'une des revendications précédentes, dans lequel chaque cavité (123) comprend au moins deux logements, chacun des logements logeant une particule.

12. Equipement de dépôt selon l'une des revendications précédentes, dans lequel lesdites particules ont un diamètre compris entre 5 µm et 100 µm.

13. Procédé de dépôt (200) de particules utilisant l'équipement de dépôt (100) selon l'une des revendications précédentes, comprenant les étapes suivantes :
- dans une première étape (E1), générer un faisceau laser (103) constitué d'une série d'impulsions lumineuses ;
- dans une deuxième étape (E2), diriger le faisceau laser vers la première surface (121) de la couche génératrice (120) et focaliser le faisceau laser au niveau d'une zone de focalisation sur la première surface de la couche génératrice ;
- dans une troisième étape (E3), ajuster le niveau d'énergie du faisceau laser de manière à générer un plasma au niveau de la première surface de la couche génératrice d'ondes de choc ;
- dans une quatrième étape (E4), générer des ondes de choc au sein de la couche génératrice (120), les ondes de choc se propageant depuis la première surface en direction de la seconde surface de la couche génératrice pour éjecter au moins une particule en direction de la surface de dépose (141) du substrat (140).

14. Procédé de dépôt selon la revendication 13, dans lequel le niveau d'énergie du faisceau laser est calculé à partir d'un modèle numérique en fonction de la taille de la particule, du matériau de la particule, du matériau du substrat receveur, du matériau de la couche génératrice, de l'épaisseur de la couche génératrice.

15. Procédé de dépôt selon la revendication 13 ou 14, comprenant en outre une étape préliminaire (E0) de calibration du niveau d'énergie du faisceau laser comprenant les étapes suivantes :
- répéter les étapes E1 à E4 pour déposer au moins une particule sur une région de calibration de la surface de dépose d'un substrat,
- acquérir au moins une image de la zone d'impact de ladite particule sur la surface de dépose du substrat,
- évaluer la déformation plastique de la particule et de la zone d'impact de la surface de dépose du substrat receveur en fonction du niveau d'énergie du faisceau laser,
- déterminer le niveau d'énergie optimal du faisceau laser.

## Patentansprüche

1. Ausrüstung zur selektiven Ablagerung durch Stoßwellenprojektion (100) wenigstens eines Partikels (11) auf einer Ablagerungsfläche (141) eines Empfängersubstrats (140), wobei die Ausrüstung umfasst:
- wenigstens eine Laserquelle (101), die dazu ausgebildet ist, einen Laserstrahl (103) auszusenden, wobei der Laserstrahl aus einer Reihe von Lichtimpulsen besteht;
- einen Substratträger (130), auf dem das Substrat (140) befestigt ist;
- eine stoßwellenerzeugende Schicht (120), umfassend eine erste Oberfläche (121), die dem Laserstrahl zugewandt ist, und eine zweite Oberfläche (122), die der Ablagerungsfläche (141) des Substrats zugewandt ist;
- ein optisches System (102) zum Lenken und Fokussieren des Laserstrahls auf einen Fokussierungsbereich der ersten Oberfläche (121) der erzeugenden Schicht;
- wobei die zweite Oberfläche (122) eine Vielzahl von Hohlräumen (123) umfasst, wobei jeder der Hohlräume wenigstens einen Partikel (11) aufnimmt;
- wobei der Laserstrahl dazu ausgebildet ist, ein Plasma (104) im Fokusbereich auf der ersten Oberfläche (121) der erzeugenden Schicht zu erzeugen und eine Stoßwelle (105) zu erzeugen, die sich innerhalb der erzeugenden Schicht (120) von der ersten Oberfläche (121) zur zweiten Oberfläche (122) der erzeugenden Schicht ausbreitet, um wenigstens einen Partikel (11) in Richtung der Ablagerungsfläche (141) des Empfängersubstrats (140) auszustoßen.

2. Ablagerungsausrüstung nach Anspruch 1, ferner umfassend eine Begrenzungsschicht (110), die für die Wellenlänge des Laserstrahls transparent ist und die erste Oberfläche (121) der erzeugenden Schicht bedeckt, wobei die Begrenzungsschicht dazu ausgebildet ist, das erzeugte Plasma auf die erste Oberfläche (121) der erzeugenden Schicht (120) zu begrenzen.

3. Ablagerungsausrüstung nach Anspruch 2, wobei die Begrenzungsschicht eine Glasschicht oder eine Wasserschicht ist.

4. Ablagerungsausrüstung nach Anspruch 2 oder 3, wobei die Begrenzungsschicht eine Dicke zwischen 200 und 5000 µm aufweist.

5. Ablagerungsausrüstung nach einem der vorhergehenden Ansprüche, ferner umfassend ein Steuerungssystem (170) für die Laserquelle, das dazu ausgebildet ist, ein Energieniveau des Laserstrahls zu steuern.

6. Ablagerungsausrüstung nach Anspruch 5, wobei das Steuerungssystem (170) einen Rechner umfasst, der dazu ausgebildet ist, ein optimales Energieniveau des Laserstrahls anhand eines numerischen Modells in Abhängigkeit von der Partikelgröße, dem Partikelmaterial, dem Material des Empfängersubstrats, dem Material der erzeugenden Schicht und der Dicke der erzeugenden Schicht zu bestimmen.

7. Ablagerungsausrüstung nach einem der vorhergehenden Ansprüche, ferner umfassend ein Heizmittel (180) zum Erwärmen des Substrats (140).

8. Ablagerungsausrüstung nach einem der vorhergehenden Ansprüche, ferner umfassend einen Temperatursensor (181), der dazu ausgebildet ist, die Temperatur des Substrats zu messen.

9. Ablagerungsausrüstung nach einem der vorhergehenden Ansprüche, ferner umfassend ein Bilderfassungssystem, wie z. B. eine Kamera.

10. Ablagerungsausrüstung nach einem der vorhergehenden Ansprüche, wobei die Laserquelle (101) dazu ausgebildet ist, einen Laserstrahl auszusenden, der aus einer Reihe von Lichtimpulsen mit einer Impulsdauer zwischen 1 und 5 Nanosekunden, mit einem Energieniveau zwischen 1 und 10 Joules besteht.

11. Ablagerungsausrüstung nach einem der vorhergehenden Ansprüche, wobei jeder Hohlraum (123) wenigstens zwei Aufnahmen umfasst, wobei jede der Aufnahmen einen Partikel aufnimmt.

12. Ablagerungsausrüstung nach einem der vorhergehenden Ansprüche, wobei die Partikel einen Durchmesser zwischen 5 µm und 100 µm aufweisen.

13. Verfahren zum Ablagern (200) von Partikeln unter Verwendung der Ablagerungsausrüstung (100) nach einem der vorhergehenden Ansprüche, umfassend die folgenden Schritte:
- in einem ersten Schritt (E1) Erzeugen eines Laserstrahls (103), der aus einer Reihe von Lichtimpulsen besteht;
- in einem zweiten Schritt (E2), Richten des Laserstrahls auf die erste Oberfläche (121) der erzeugenden Schicht (120) und Fokussieren des Laserstrahls in einem Fokussierungsbereich auf der ersten Oberfläche der erzeugenden Schicht;
- in einem dritten Schritt (E3), Einstellen des Energieniveaus des Laserstrahls derart, dass ein Plasma an der ersten Oberfläche der stoßwellenerzeugenden Schicht erzeugt wird;
- in einem vierten Schritt (E4) Erzeugen von Stoßwellen innerhalb der erzeugenden Schicht (120), wobei sich die Stoßwellen von der ersten Oberfläche in Richtung der zweiten Oberfläche der erzeugenden Schicht ausbreiten, um wenigstens einen Partikel in Richtung der Ablagerungsfläche (141) des Substrats (140) auszustoßen.

14. Ablagerungsverfahren nach Anspruch 13, wobei das Energieniveau des Laserstrahls aus einem numerischen Modell in Abhängigkeit von der Partikelgröße, dem Material des Partikels, dem Material des Empfängersubstrats, dem Material der erzeugenden Schicht, der Dicke der erzeugenden Schicht berechnet wird.

15. Ablagerungsverfahren nach Anspruch 13 oder 14, ferner umfassend einen vorbereitenden Schritt (E0) zur Kalibrierung des Energieniveaus des Laserstrahls, der die folgenden Schritte umfasst:
- Wiederholen der Schritte E1 bis E4, um wenigstens einen Partikel auf einem Kalibrierungsbereich der Ablagerungsfläche eines Substrats abzulagern,
- Erfassen wenigstens eines Bildes des Aufprallbereichs des Partikels auf der Ablagerungsfläche des Substrats,
- Bewerten der plastischen Verformung des Partikels und des Auftreffbereichs der Ablagerungsfläche des Empfängersubstrats abhängig vom Energieniveau des Laserstrahls,
- Bestimmen des optimalen Energieniveaus des Laserstrahls.

## Claims

1. Equipment (100) for selectively depositing by shockwave-induced spraying at least one particle (11) onto a deposition surface (141) of a receiver substrate (140), said equipment comprising:
- at least one laser source (101) configured to emit a laser beam (103), said laser beam being made up of a series of light pulses;
- a substrate carrier (130) to which the substrate (140) is fastened;
- a shockwave-generating layer (120) comprising a first surface (121) that is oriented toward the laser beam and a second surface (122) that is oriented toward the deposition surface (141) of the substrate;
- an optical system (102) for directing and focusing said laser beam toward a focal region of the first surface (121) of the generating layer;
- said second surface (122) comprising a plurality of cavities (123), each of the cavities housing at least one particle (11);
- said laser beam being configured to generate a plasma (104) in the focal region on the first surface (121) of the generating layer and a shockwave (105) that propagates within the generating layer (120) from the first surface (121) to the second surface (122) of the generating layer in order to eject at least one particle (11) in the direction of the deposition surface (141) of the receiver substrate (140).

2. The deposition equipment as claimed in claim 1, further comprising a confinement layer (110) transparent at the wavelength of the laser beam and covering the first surface (121) of the generating layer, said confinement layer being configured to confine the plasma generated at the level of the first surface (121) of the generating layer (120).

3. The deposition equipment as claimed in claim 2, in which said confinement layer is a layer of glass or a layer of water.

4. The deposition equipment as claimed in claim 2 or 3, in which said confinement layer has a thickness between 200 and 5000 µm inclusive.

5. The deposition equipment as claimed in any one of the preceding claims, further comprising a system (170) for controlling the laser source configured to command an energy level of the laser beam.

6. The deposition equipment as claimed in claim 5, in which the control system (170) comprises a computer configured to determine an optimum energy level of the laser beam on the basis of a digital model as a function of the size of the particle, of the material of the particle, of the material of the receiver substrate, of the material of the generating layer, of the thickness of the generating layer.

7. The deposition equipment as claimed in any one of the preceding claims, further comprising a heating means (180) for heating the substrate (140).

8. The deposition equipment as claimed in any one of the preceding claims, further comprising a temperature sensor (181) configured to measure the temperature of the substrate.

9. The deposition equipment as claimed in any one of the preceding claims, further comprising an image acquisition system, such as a video camera.

10. The deposition equipment as claimed in any one of the preceding claims, in which said laser source (101) is configured to emit a laser beam consisting of a series of light pulses with a pulse duration between 1 and 5 nanoseconds inclusive, with an energy level between 1 and 10 joules inclusive.

11. The deposition equipment as claimed in any one of the preceding claims, in which each cavity (123) comprises at least two housings, each of the housings housing a particle.

12. The deposition equipment as claimed in any one of the preceding claims, in which said particles have a diameter between 5 µm and 100 µm inclusive.

13. A method (200) of depositing particles using the deposition equipment (100) as claimed in any one of the preceding claims, comprising the following steps:
- in a first step (E1), generating a laser beam (103) consisting of a series of light pulses;
- in a second step (E2), directing the laser beam toward the first surface (121) of the generating layer (120) and focusing the laser beam at the level of a focal region on the first surface of the generating layer;
- in a third step (E3), adjusting the energy level of the laser beam in such a manner as to generate a plasma at the level of the first surface of the shockwave-generating layer;
- in a fourth step (E4), generating shockwaves in the generating layer (120), the shockwaves propagating from the first surface in the direction of the second surface of the generating layer to eject at least one particle in the direction of the deposition surface (141) of the substrate (140).

14. The deposition method as claimed in claim 13, in which the energy level of the laser beam is calculated on the basis of a digital model as a function of the size of the particle, of the material of the particle, of the material of the receiver substrate, of the material of the generating layer, of the thickness of the generating layer.

15. The deposition method as claimed in claim 13 or 14, further comprising a preliminary step (E0) of calibration of the energy level of the laser beam comprising the following steps:
- repeating the steps E1 to E4 to deposit at least one particle on a calibration region of the deposition surface of a substrate,
- acquiring at least one image of the impact zone of said particle on the deposition surface of the substrate,
- evaluating the plastic deformation of the particle and of the impact zone of the deposition surface of the receiver substrate as a function of the energy level of the laser beam,
- determining the optimum energy level of the laser beam.
